(19) Europäisches Patentamt / European Patent Office / Office européen des brevets

(11) **EP 3 950 275 A1**

(12) **EUROPEAN PATENT APPLICATION**
published in accordance with Art. 153(4) EPC


(43) Date of publication:
**09.02.2022 Bulletin 2022/06**

(21) Application number: **20778828.2**

(22) Date of filing: **27.03.2020**

(51) International Patent Classification (IPC):
***B29C 64/118** (2017.01)* ***B29C 64/314** (2017.01)*
***B33Y 70/00** (2020.01)*

(52) Cooperative Patent Classification (CPC):
**B29C 64/118; B29C 64/314; B33Y 70/00**

(86) International application number:
**PCT/JP2020/014063**

(87) International publication number:
**WO 2020/196839 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2019 JP 2019064033**



(71) Applicant: **Mitsubishi Chemical Corporation**
**Chiyoda-ku**
**Tokyo 100-8251 (JP)**

(72) Inventor: **YAMASUE, Nao**
**Tokyo 100-8251 (JP)**

(74) Representative: **Vossius & Partner**
**Patentanwälte Rechtsanwälte mbB**
**Siebertstraße 3**
**81675 München (DE)**


(54) **FILAMENT FOR 3D MODELING, ROLL, AND CARTRIDGE FOR 3D PRINTER**


(57) A filament for three-dimensional printing of the present invention includes a resin layer (X) containing a polycarbonate resin (A) and a thermoplastic resin (B) other than the polycarbonate resin (A). The resin layer (X) has one loss tangent (tanδ) peak measured by temperature dispersion measurement for dynamic viscoelasticity in JIS K7244-4 at a strain of 0.1%, a frequency of 10 Hz, and a temperature rise rate of 3°C/min in a range of 0 to 200°C, and the peak exists in a range of 100°C or more and less than 150°C.


Fig. 1

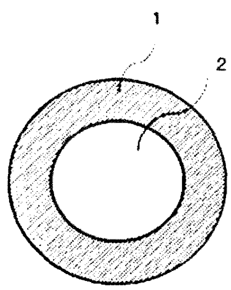


EP 3 950 275 A1

## Description

### Technical Field

The present invention relates to a filament for three-dimensional printing, a winding body of a filament for three-dimensional printing, and a cartridge for a three-dimensional printer including a winding body of a filament for three-dimensional printing.

### Background Art

A thermal lamination and accumulation system through extrusion, i.e., a system that is currently referred generally to as a three-dimensional printer (3D printer), is used for constructing a three-dimensional object in a layer form based on a computer-aided design (CAD) model by extruding a material having fluidity via a nozzle portion of an extrusion head. The thermal lamination and accumulation system is available, for example, from Stratasys, Inc. in the U.S.
As the thermal lamination and accumulation system, a material extrusion method (ME method) has been widely used due to the simplification thereof. In the ME method, a material in the form of a filament formed of a thermoplastic resin is inserted in the extrusion head, and under heating for melting, continuously extruded to an X-Y plane substrate in a chamber from the nozzle portion of the extrusion head, and the extruded resin is accumulated on and fused to a resin laminate having been accumulated, which are integrated and solidified through cooling. In the ME method, in general, the extrusion is repeated while raising a nozzle position with respect to the substrate in the Z axis perpendicular to the X-Y plane, so as to model a three-dimensional object resembling the CAD model.
3D printers have been widely used for the purpose of trial production of formed articles, and in the filament for three-dimensional printing used for the purpose, resins that are relatively good in formability and fluidity, such as an acrylonitrile-butadiene-styrene (ABS) based resin, a polypropylene based resin (PP), and a polylactic acid (PLA), have been generally used.
In recent years, the 3D printers are considered to apply to a functional component for the actual use. Assuming the actual use, the use of a material having high heat resistance is demanded, and for example, as described in PTLs 1 and 2, it is being investigated that a polycarbonate resin and the like are used for the material for three-dimensional printing.
It has been known that a polycarbonate resin is blended with other components for imparting various capabilities thereto. For example, PTL 3 describes a polycarbonate resin composition containing a polycarbonate resin, a phenyl group-containing silicone oil, and a polycaprolactone, for the enhancement of the sliding capability without being deteriorated in the transparency of the molded object. PTL 4 describes a resin composition containing a polycarbonate resin, a fluidity improver, and an inorganic filler. The fluidity improver used in PTL 4 includes an aromatic polyester oligomer, an aromatic polycarbonate oligomer, a polycaprolactone, and the like.

### Citation List

#### Patent Literatures

PTL 1: JP 2005-523391 A
PTL 2: JP 2013-540629 A
PTL 3: JP 9-87504 A
PTL 4: JP 2003-26911 A

### Summary of Invention

### Technical Problem

The 3D printer that is currently in mainstream is for printing a general-purpose resin, and the substrate temperature thereof in printing cannot be higher. Accordingly, a polymer having a high melting point, such as a polycarbonate resin, is rapidly cooled after printing on the substrate, and at that time, suffers a problem of warpage of the 3D printed object due to the difference in linear expansion coefficient before and after cooling.
For solving the problem, it is considered that the polycarbonate resin is modified by blending another resin component, but the use of two or more kinds of resins as the material for three-dimensional printing causes a problem that the interlayer adhesion between the materials (such as the strands) accumulated for constructing a 3D printed object

is lowered to decrease the mechanical strength of the 3D printed object.

PTLs 3 and 4 show the addition of another resin component to a polycarbonate resin, but the polycarbonate compositions shown in PTLs 3 and 4 target the application to die molding, such as injection molding, and the use as a material for three-dimensional printing is not assumed thereby.

Accordingly, an object of the present invention is to provide a filament for three-dimensional printing that suppresses warpage of the 3D printed object and is excellent in interlayer adhesion in the 3D printed object, without impairing the characteristics inherent to the polycarbonate resin, such as heat resistance and impact resistance, in the use of the polycarbonate resin as a material for three-dimensional printing.

Solution to Problem

As a result of earnest investigations by the present inventors, it has been found that the object can be achieved by a filament for three-dimensional printing including a resin layer containing a polycarbonate resin (A) and a thermoplastic resin (B) that is different from the polycarbonate resin (A), the resin layer having one tan$\delta$ peak, the peak existing in a range of 100°C or more and less than 150°C, and the present invention shown below has been completed. Specifically, the present invention provides the items [1] to [10] below.

[1] A filament for three-dimensional printing including: a resin layer (X) containing a polycarbonate resin (A) and a thermoplastic resin (B) other than the polycarbonate resin (A) and satisfying the following condition (1):
condition (1): having one loss tangent (tan$\delta$) peak measured by temperature dispersion measurement for dynamic viscoelasticity in JIS K7244-4 at a strain of 0.1%, a frequency of 10 Hz, and a temperature rise rate of 3°C/min in a range of 0 to 200°C, the peak existing in a range of 100°C or more and less than 150°C.
[2] The filament for three-dimensional printing according to the item [1], wherein the thermoplastic resin (B) has a glass transition temperature (Tgb) of 100°C or less.
[3] The filament for three-dimensional printing according to the item [1] or [2], wherein the thermoplastic resin (B) is at least one kind selected from the group consisting of a polycaprolactone based resin (B1), a polyester based resin (B2), and an aromatic polycarbonate based resin (B3).
[4] The filament for three-dimensional printing according to any one of the items [1] to [3], wherein the resin layer (X) contains the polycarbonate resin (A) in an amount of 50 parts by mass or more and 98 parts by mass or less per 100 parts by mass of resin component contained in the resin layer (X).
[5] The filament for three-dimensional printing according to any one of the items [1] to [4], wherein the polycarbonate resin (A) has a viscosity average molecular weight of 20,000 or more and 70,000 or less.
[6] The filament for three-dimensional printing according to any one of the items [1] to [5], wherein the polycarbonate resin (A) is a bisphenol A type polycarbonate resin.
[7] The filament for three-dimensional printing according to any one of the items [1] to [6], wherein the filament for three-dimensional printing has a multilayer structure.
[8] The filament for three-dimensional printing according to any one of the items [1] to [7], wherein the filament for three-dimensional printing has a filament diameter of 1.0 mm or more and 5.0 mm or less.
[9] A winding body including the filament for three-dimensional printing according to any one of the items [1] to [8].
[10] A cartridge for a three-dimensional printer, including the winding body according to the item [9], and a container housing the winding body inside.

Advantageous Effects of Invention

According to the present invention, a filament for three-dimensional printing that suppresses warpage of the 3D printed object and is excellent in interlayer adhesion in the 3D printed object, while achieving good heat resistance and impact resistance can be provided.

The mechanism of the effects of the present invention is presumed as follows. Specifically, it is presumed that the thermoplastic resin (B) having a low glass transition temperature is completely compatibilized with the polycarbonate resin (A), so as to decrease the glass transition temperature of the polycarbonate resin (A), thereby achieving the effects of the present invention.

Brief Description of Drawing

Fig. 1 is a schematic illustration showing one example of the filament for three-dimensional printing of the present invention.

Description of Embodiments

Embodiments for practicing the present invention will be described in detail below. The embodiments shown below are examples for describing the present invention and shall not be construed as limiting the present invention to the following. The present invention can be practiced with various modifications within the scope of the substance thereof.

[Filament for Three-dimensional Printing]

The filament for three-dimensional printing of the present invention includes a resin layer (X) containing a polycarbonate resin (A) and a thermoplastic resin (B) other than the polycarbonate resin (A). The resin layer (X) of the present invention has one loss tangent (tanδ) peak measured by temperature dispersion measurement for dynamic viscoelasticity in JIS K7244-4 at a strain of 0.1%, a frequency of 10 Hz, and a temperature rise rate of 3°C/min in a range of 0 to 200°C, and the peak exists in a range of 100°C or more and less than 150°C. The details of the measurement method are shown in the examples later, and a resin composition for three-dimensional printing constituting the resin layer (X) may be measured.

In the filament for three-dimensional printing of the present invention, the resin layer (X) constituting the filament contains the polycarbonate resin (A) and the thermoplastic resin (B), and has one loss tangent (tanδ) peak, from which it is considered that the resins are compatibilized with each other. Furthermore, in the case where the one peak is in the prescribed range, the filament for three-dimensional printing can suppress warpage of a 3D printed object and can improve the interlayer adhesion, without largely impairing the characteristics inherent to the polycarbonate resin (A), such as heat resistance and impact resistance.

On the other hand, the case where two or more tanδ peaks exist means that the resin layer (X) used in the filament for three-dimensional printing contains resins that have tanδ in the prescribed temperature range but are not compatibilized with each other, and thereby, in printing a 3D printed object (resin formed object) with a three-dimensional printer, the materials (for example, accumulated strands) are not adhered to each other, resulting in low interlayer adhesion in the 3D printed object. In the case where the temperature of the tanδ peak is less than 100°C, the heat resistance and the like become insufficient. In the case where the temperature of the tanδ peak is 150°C or more, on the other hand, warpage of the 3D printed object occurs in cooling after printing, and the printing cannot be performed properly in some cases at the discharge temperature of the ordinary three-dimensional printer.

From the standpoint of the heat resistance, the temperature of the tanδ peak is preferably 110°C or more, more preferably 115°C or more, further preferably 120°C or more, particularly preferably 125°C or more, and most preferably 130°C or more. From the standpoint of the molding processability and the standpoint of the ease in suppressing warpage of the 3D printed object in cooling, the temperature of the tanδ peak is preferably 148°C or less, more preferably 145°C or less, further preferably 143°C or less, and most preferably 140°C or less.

<Polycarbonate Resin (A)>

Examples of the polycarbonate resin (A) used in the filament for three-dimensional printing of the present invention include an aliphatic polycarbonate resin and an aromatic polycarbonate resin, and an aromatic polycarbonate resin is preferred from the standpoint of the heat resistance. The aromatic polycarbonate resin is an aromatic homo- or co-polycarbonate resin obtained through reaction of an aromatic divalent phenol based compound and a carbonate precursor, such as phosgene or a carbonate diester.

Among these, an aromatic divalent phenol based compound represented by the following general formula (1) is preferably used:

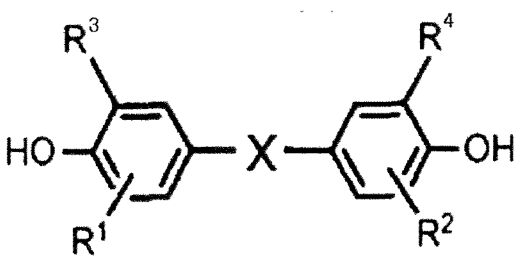 (1)

wherein in the general formula (1), $R^1$ to $R^4$ each independently represent a hydrogen atom, a substituted or unsubstituted alkyl group having 1 to 20 carbon atoms, or a substituted or unsubstituted aryl group, and X represents a substituted or unsubstituted alkylidene group or a substituted or unsubstituted cycloalkylidene group.

In the general formula (1), examples of the substituted or unsubstituted alkyl group having 1 to 20 carbon atoms represented by $R^1$ to $R^4$ include a methyl group, an ethyl group, a n-propyl group, an isopropyl group, a n-butyl group, an isobutyl group, a sec-butyl group, a tert-butyl group, a n-pentyl group, a sec-pentyl group, a n-hexyl group, a n-heptyl group, and a n-octyl group, and examples of the substituted or unsubstituted aryl group include a phenyl group, a benzyl group, a tolyl group, a 4-methylphenyl group, and a naphthyl group.

Among these, $R^1$ to $R^4$ each independently preferably represent any of a hydrogen atom, a methyl group, an ethyl group, a n-propyl group, and a 4-methylphenyl group, more preferably any of a hydrogen atom and a methyl group, and further preferably a hydrogen atom.

In the general formula (1), the alkylidene group represented by X is preferably an isopropylidene group. The cycloalkylidene group represented by X is preferably a cycloalkylidene group, such as a cyclohexylidene group and a cyclododecylidene group, and a methyl- or ethyl-substituted group thereof. Among these, X preferably represents an isopropylidene group, a cyclohexylidene group, or a methyl-substituted cyclohexylidene group.

The compound represented by the general formula (1) used is preferably 2,2-bis(4-hydroxyphenyl)propane or 2,2-bis(4-hydroxy-3,5-dimethylphenyl) propane from the standpoint of the heat resistance, and most preferably 2,2-bis(4-hydroxyphenyl)propane from the standpoint of the heat resistance and the modeling capability. Accordingly, the most preferred case is that the aromatic polycarbonate resin is a bisphenol A type polycarbonate resin. The bisphenol A type polycarbonate resin is preferably a homo-polycarbonate resin using 2,2-bis(4-hydroxyphenyl)propane alone as the aromatic divalent phenol based compound, and may be a co-polycarbonate resin using another aromatic divalent phenol based compound in combination as long as the effects of the present invention are impaired. In the co-polycarbonate resin, the constituting unit derived from 2,2-bis(4-hydroxyphenyl)propane is, for example, 90% by mol or more, and preferably 95% by mol or more, based on the constituting units derived from the aromatic divalent phenol based compound.

In the case where phosgene is used as the carbonate precursor, the aromatic polycarbonate resin is generally produced through reaction performed in the presence of an acid binding agent and a solvent. Examples of the acid binding agent used include an alkali metal hydroxide, such as sodium hydroxide and potassium hydroxide, and an amine compound, such as pyridine. Examples of the solvent used include a halogenated hydrocarbon, such as methylene chloride and chlorobenzene. A catalyst, such as a tertiary amine or a quaternary ammonium salt, may be used for accelerating the reaction. The reaction temperature is generally 0 to 40°C, and the reaction time is generally from several minutes to 5 hours.

In the case where the aromatic polycarbonate resin is produced through ester exchange reaction using a carbonate diester as the carbonate precursor, the aromatic divalent phenol based compound and the carbonate diester in a predetermined ratio are agitated under heating in an inert gas atmosphere, and an alcohol or phenol compound thus formed is distilled off. The reaction temperature in this case varies depending on the boiling point of the alcohol or phenol compound formed or the like, and is generally in a range of 120 to 300°C. The pressure of the reaction system is reduced pressure from the initial stage of reaction, and the reaction is completed while distilling off the alcohol or phenol compound. A catalyst that is generally used for ester exchange reaction may be used for accelerating the reaction. A suitable molecular weight modifier and the like may be used appropriately.

The polycarbonate resin (A) used may be a commercially available product, and examples thereof include "Iupilon (registered trade name)" series, produced by Mitsubishi Engineering-Plastics Corporation, and "Wonderlite (registered trade name)" series, produced by Asahi Kasei Advance Corporation.

A glass transition temperature (Tga) of the polycarbonate resin (A) is, for example, 140°C or more, preferably 145°C or more, and more preferably 150°C or more. The glass transition temperature (Tga) is, for example, 165°C or less, and preferably 160°C or less. In the case where the glass transition temperature (Tga) of the polycarbonate resin (A) is in the range, the formed article made from the filament for three-dimensional printing has good heat resistance and impact resistance, and also has good molding processability.

The glass transition temperature (Tga) is the temperature of the loss tangent (tan$\delta$) peak measured by the temperature dispersion measurement for dynamic viscoelasticity of the resin. The detailed measurement condition is shown in the examples later.

The molecular weight of the polycarbonate resin (A) is not particularly limited, and the resin having a viscosity average molecular weight in a range, for example, of 10,000 to 120,000, preferably 20,000 to 70,000, and more preferably 30,000 to 50,000, may be used. In the case where the viscosity average molecular weight of the polycarbonate resin (A) is in the range, the filament for three-dimensional printing can have good molding processability.

The viscosity average molecular weight means a value obtained in such a manner that the intrinsic viscosity (limiting viscosity) [$\eta$] (unit: dL/g) at a temperature of 20°C is measured with a Ubbelohde viscometer using methylene chloride as a solvent, and the value is calculated by the Schnell's viscosity formula, i.e., $\eta = 1.23 \times 10^{-4} Mv^{0.83}$. The intrinsic viscosity (limiting viscosity) [$\eta$] is a value obtained in such a manner that the specific viscosity [$\eta$sp] is measured for each of the solution concentrations [C] (g/dL), and the value is calculated by the following expression.

$$\eta = \lim_{c \to 0} \eta_{sp} / c$$

<Thermoplastic Resin (B)>

The thermoplastic resin (B) used in the present invention is a thermoplastic resin other than the polycarbonate resin (A), and is a thermoplastic resin having a composition or a structure that is different in composition or structure from the polycarbonate resin (A) contained in the resin layer (X). In the filament for three-dimensional printing of the present invention, even though the glass transition temperature (Tga) of the polycarbonate resin (A) alone is high, the use of the resin layer (X) containing the thermoplastic resin (B) in addition to the polycarbonate resin (A) shifts the one tanδ peak described above to the low temperature side and can be in a temperature range of less than 150°C. Accordingly, a resin formed object (3D printed object) can be produced with a three-dimensional printer at a relatively low discharge temperature, and warpage occurring in the 3D printed object can be suppressed, while retaining the heat resistance, the impact resistance, and the like favorably.

The thermoplastic resin (B) may have a glass transition temperature (Tgb) that is lower than the glass transition temperature (Tga) of the polycarbonate resin (A). From the standpoint that the temperature of the loss tangent (tanδ) peak described above can be readily controlled to less than 150°C, and the temperature of the loss tangent (tanδ) peak described above can be controlled to less than 150°C even though the amount of the thermoplastic resin (B) blended is small, the glass transition temperature (Tgb) is preferably 100°C or less, more preferably 90°C or less, further preferably 80°C or less, particularly preferably 60°C or less, still further preferably 30°C or less, and most preferably - 20°C or less. The lower limit of the glass transition temperature (Tgb) is not particularly limited, and is, for example, -80°C.

The molecular weight of the thermoplastic resin (B) is, for example, 5,000 or more, preferably 10,000 or more, more preferably 30,000 or more, particularly preferably 50,000 or more, and most preferably 100,000 or more. The molecular weight of the thermoplastic resin (B) is, for example, 350,000 or less, preferably 320,000 or less, more preferably 300,000 or less, particularly preferably 290,000 or less, and most preferably 280,000 or less. In the case where the molecular weight of the thermoplastic resin (B) is in the range, the characteristics of the polycarbonate resin (A) are not impaired even though the temperature of the tanδ peak is less than 150°C, thereby improving the impact resistance and the like and improving the molding processability.

The molecular weight of the thermoplastic resin (B) described above means a viscosity average molecular weight for an aromatic polycarbonate based resin (B3) described later, and means a number average molecular weight for the molecular weights of the other resins. The measurement method of the viscosity average molecular weight is as described above, and the measurement method of the number average molecular weight is as follows.

The number average molecular weight is measured by gel permeation chromatography (GPC) (HLC-8120, produced by Tosoh Corporation). A 0.3% by mass chloroform solution of the thermoplastic resin (B) is prepared, then 20 μL of the solution is injected to an equipment having columns (TSKgel Super HM-H × 4 and TSKguardcolumn Super H-H), produced by Tosoh Corporation, mounted thereon, and measured under condition of a flow rate of 0.6 mL/min, chloroform as an eluent, and a column temperature of 40°C, and the number average molecular weight (Mn) is calculated as standard polystyrene conversion.

The thermoplastic resin (B) is preferably a resin that is compatible with the polycarbonate resin (A), and is preferably at least one kind selected from a polycaprolactone based resin (B1), a polyester based resin (B2), and the aromatic polycarbonate based resin (B3). Among these, at least one kind selected from a polycaprolactone based resin (B1) and a polyester based resin (B2) is more preferred, and a polycaprolactone based resin (B1) is further preferred. The use of the polycaprolactone based resin (B1) can provide the one tanδ peak, and can lower the temperature of the peak with a small blended amount thereof. Accordingly, the effects of the present invention can be particularly exerted, and the impact resistance and the like can be readily improved without impairing the characteristics inherent to the polycarbonate resin (A). The thermoplastic resin (B) may be used alone, or two or more kinds thereof may be used.

<Polycaprolactone based Resin (B1)>

Examples of the polycaprolactone based resin (B1) used as the thermoplastic resin (B) include a homopolymer of polycaprolactone and a copolymer of caprolactone and an additional aliphatic hydroxycarboxylic acid.

The homopolymer of polycaprolactone can be obtained, for example, through ordinary ring-opening polymerization of ε-caprolactone with an initiator, which is active hydrogen of an alcohol or the like for example. The functionality number of the initiator is not particularly limited, and is preferably bifunctional or trifunctional. The homopolymer of polycaprolactone may also be obtained through dehydration polycondensation of 6-hydroxycaproic acid, or through polymerization of ε-caprolactone and 6-hydroxycaproic acid.

Examples of the copolymer of polycaprolactone include a copolymer of ε-caprolactone or 6-hydroxycaproic

acid with an additional aliphatic hydroxycarboxylic acid. Examples of the additional aliphatic hydroxycarboxylic acid include glycolic acid, glycolide, lactic acid, lactide, various hydroxybutyric acid, various hydroxyvaleric acid, various hydroxycaproic acid, and cyclic anhydrides thereof. The ratio of ε-caprolactone or 6-hydroxycaproic acid and the additional aliphatic hydroxycarboxylic acid copolymerized (ε-caprolactone or 6-hydroxycaproic acid)/(additional aliphatic hydroxycarboxylic acid) may be 100/0 to 30/70.

The number average molecular weight of the polycaprolactone based resin (B1) is, for example, 5,000 or more, preferably 10,000 or more, more preferably 30,000 or more, particularly preferably 50,000 or more, and most preferably 100,000 or more. The number average molecular weight thereof is, for example, 350,000 or less, preferably 320,000 or less, more preferably 300,000 or less, particularly preferably 290,000 or less, and most preferably 280,000 or less. In the case where the number average molecular weight thereof is in the range, the temperature of the tanδ peak can be readily controlled to the prescribed range while retaining the mechanical strength and the like favorably.

The polycaprolactone based resin (B1) used may be a commercially available product, and examples thereof include "Capa" series, produced by Perstorp AB (currently known as Ingevity Corporation).

<Polyester based Resin (B2)>

Examples of the polyester based resin (B2) used as the thermoplastic resin (B) include an aliphatic polyester based resin or an aromatic polyester based resin obtained through polymerization of a polybasic carboxylic acid and a polyhydric alcohol. In the case where the polycarbonate resin (A) is aromatic, the polyester based resin (B2) used is preferably an aromatic polyester based resin from the standpoint of the compatibility. Examples of the aromatic polyester based resin include a polyester based resin in which an aromatic carboxylic acid or an aromatic alcohol is used as at least one of the polybasic carboxylic acid and the polyhydric alcohol.

Examples of the polybasic carboxylic acid component include an aromatic dicarboxylic acid, such as terephthalic acid, isophthalic acid, 2-chloroterephthalic acid, 2,5-dichloroterephthalic acid, 2-methylterephthalic acid, 4,4-stilbenedicarboxylic acid, 4,4-biphenyldicarboxylic acid, orthophthalic acid, 2,6-naphthalenedicarboxylic acid, 2,7-naphthalenedicarboxylic acid, bisbenzoic acid, bis(p-carboxyphenyl)methane, anthracenedicarboxylic acid, 4,4-diphenyl ether dicarboxylic acid, 4,4-diphenoxyethanedicarboxylic acid, 5-sodium sulfoisophthalate, and ethylenebis-p-benzoic acid, and an aliphatic dicarboxylic acid, such as succinic acid, adipic acid, sebacic acid, azelaic acid, dodecanedioic acid, 1,3-cyclohexanedicarboxylic acid, and 1,4-cyclohexanedicarboxylic acid. The polybasic carboxylic acid component may be used alone or as a mixture of two or more kinds thereof.

Examples of the polyhydric alcohol component include an aliphatic diol, such as diethylene glycol, ethylene glycol, 1,2-propylene glycol, 1,3-propanediol, 2,2-dimethyl-1,3-propanediol, trans-tetramethyl-1,3-cyclobutanediol, 2,2,4,4-tetramethyl-1,3-cyclobutanediol, 1,4-butanediol, neopentyl glycol, 1,5-pentanediol, 1,6-hexanediol, 1,4-cyclohexane dimethanol, 1,3-cyclohexanedimethanol, decamethylene glycol, and cyclohexanediol, and an aromatic diol, such as p-xylenediol, bisphenol A, tetrabromobisphenol A, and tetrabromobisphenol A bis(2-hydroxyethyl ether).

The polyhydric alcohol component may be used alone or as a mixture of two or more kinds thereof.

The polyester based resin (B2) used is preferably a copolymer polyester based resin in which the polyhydric alcohol component contains 1,4-cyclohexanedimethanol in an amount of, for example, 35 to 90% by mol, preferably 45 to 80% by mol, and more preferably 50 to 70% by mol, from the standpoint of the compatibility with the polycarbonate resin (A). In this case, the other component of the polyhydric alcohol component is not particularly limited, but may be appropriately selected from the polyhydric alcohol components described above, and at least one kind selected from ethylene glycol and diethylene glycol is preferably used. The polyhydric carboxylic acid component is preferably an aromatic dicarboxylic acid, and among them, terephthalic acid is preferred.

The number average molecular weight of the polyester based resin (B2) is, for example, 5,000 or more, preferably 10,000 or more, and more preferably 30,000 or more. The number average molecular weight thereof is, for example, 350,000 or less, preferably 320,000 or less, more preferably 300,000 or less, particularly preferably 290,000 or less, and most preferably 280,000 or less. In the case where the number average molecular weight thereof is in the range, the temperature of the tanδ peak can be readily controlled to the prescribed range while retaining the mechanical strength and the like favorably.

<Aromatic Polycarbonate based Resin (B3)>

The aromatic polycarbonate based resin (B3) used as the thermoplastic resin (B) is an aromatic polycarbonate based resin that is a kind different from the polycarbonate resin (A). Specifically, an aromatic polycarbonate based resin having the glass transition temperature (Tgb) that is lower than the glass transition temperature (Tga) of the polycarbonate resin (A) may be used. The specific temperature examples of the glass transition temperature (Tgb) has been described above.

Specific examples of the aromatic polycarbonate based resin (B3) include an aromatic homo- or co-polycarbonate resin obtained through reaction of an aromatic divalent phenol based compound and phosgene or a carbonate diester, and a co-polycarbonate resin is preferred. The use of the co-polycarbonate resin can readily lower the glass

transition temperature of the aromatic polycarbonate based resin (B3). The specific examples of the method of providing the aromatic polycarbonate based resin (B3) from phosgene, a carbonate diester, or the like may be the same as for the polycarbonate resin (A).

The aromatic divalent phenol based compound used in the aromatic polycarbonate based resin (B3) may be a compound appropriately selected from the compounds enumerated for the polycarbonate resin (A) described above, but an aromatic divalent phenol based compound represented by the following general formula (2) is preferably used:

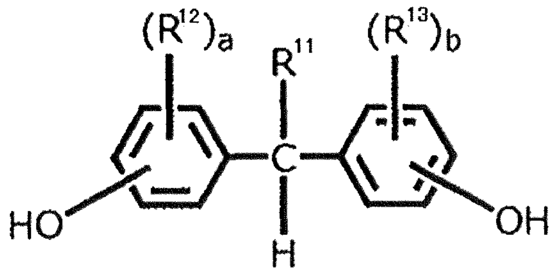

(2)

wherein in the formula (2), $R^{11}$ represents an alkyl group having 8 to 24 carbon atoms, $R^{12}$ and $R^{13}$ each independently represent a monovalent hydrocarbon group having 1 to 15 carbon atoms, and a and b each independently represent an integer of 0 to 4. In the general formula (2), a and b are preferably 0. The hydroxy groups each are preferably bonded to the 4-position. The number of carbon atoms of the alkyl group having 8 to 24 carbon atoms is preferably 9 to 22, more preferably 10 to 18, and further preferably 11 to 16. The alkyl group having 8 to 24 carbon atoms is preferably a n-nonyl group, a n-decyl group, a n-undecyl group, a n-dodecyl group, a n-hexadecyl group, or a n-octadecyl group, more preferably a n-nonyl group, a n-decyl group, a n-undecyl group, or a n-dodecyl group, and particularly preferably a n-dodecyl group.

In the case where the compound represented by the general formula (2) is used in the aromatic polycarbonate based resin (B3), a compound represented by the following formula (3) may be used in combination. The compound represented by the following formula (3) may be typically 2,2-bis(4-hydroxyphenyl)propane.

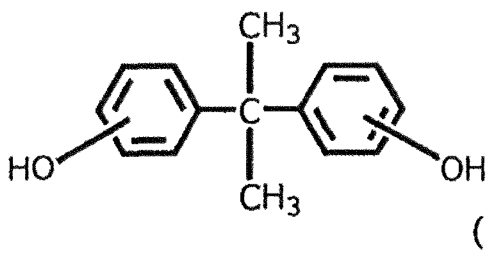

(3)

In the case where the aromatic polycarbonate based resin (B3) has constituting units derived from the aromatic divalent phenol based compounds represented by the formula (2) and (3), the constituting unit derived from the compound represented by the formula (2) is, for example, more than 10% by mol and 36.5% by mol or less in the constituting unit derived from the aromatic divalent phenol based compound. The constituting unit derived from the compound represented by the formula (3) may be 63.5% by mol or more and less than 90% by mol. The constituting unit derived from the compound represented by the formula (2) is preferably 18 to 36% by mol, and more preferably 22 to 34% by mol, and the constituting unit derived from the compound represented by the formula (3) is preferably 64 to 82% by mol, and more preferably 66 to 79% by mol.

The viscosity average molecular weight of the aromatic polycarbonate based resin (B3) is not particularly limited, and is, for example, 5,000 to 50,000, preferably 9,000 to 30,000, more preferably 10,000 to 25,000, and further preferably 11,000 to 20,000.

(Contents of Resin (A) and Resin (B))

The contents of the polycarbonate resin (A) and the thermoplastic resin (B) may be controlled to provide one tanδ peak and to control the temperature of the peak in a range of 100°C or more and less than 150°C, and it is preferred that the polycarbonate resin (A) is 50 to 98 parts by mass, and the thermoplastic resin (B) is 2 to 50 parts by mass, per 100 parts by mass of resin component contained in the resin layer (X) (resin composition for three-dimensional printing) used in the filament for three-dimensional printing. In the case where the contents thereof are in the ranges, a 3D printed object can be appropriately printed at a discharge temperature that is generally practiced in a three-dimensional printer

while suppressing the occurrence of warpage without largely impairing the characteristics inherent to the polycarbonate resin (A), such as heat resistance and impact resistance. From this standpoint, it is more preferred that the polycarbonate resin (A) is 55 to 97 parts by mass, and the thermoplastic resin (B) is 3 to 45 parts by mass, it is further preferred that the polycarbonate resin (A) is 85 to 95 parts by mass, and the thermoplastic resin (B) is 5 to 15 parts by mass, and it is particularly preferred that the polycarbonate resin (A) is 91 to 95 parts by mass, and the thermoplastic resin (B) is 5 to 9 parts by mass.

The resin layer (X) used in the filament for three-dimensional printing of the present invention may contain an additional component as long as the effects of the present invention are impaired. Examples of the additional component include a heat resisting agent, an ultraviolet ray absorbent, a light stabilizer, an antioxidant, an antistatic agent, a lubricant, a slipping agent, a crystal nucleating agent, a tackiness imparting agent, a sealability improver, an antifoggant, a release agent, a plasticizer, a pigment, a dye, a fragrance, a flame retarder, organic particles, inorganic particles, and a reinforcing material.

Specific examples of the organic particles include acrylic resin particles, melamine resin particles, silicone resin particles, and polystyrene resin particles. Specific examples of the inorganic particles include silica, alumina, kaolin, titanium dioxide, calcium carbonate, magnesium carbonate, zinc carbonate, calcium stearate, magnesium stearate, and zinc stearate.

Examples of the reinforcing material include an inorganic filler and inorganic fibers. Specific examples of the inorganic filler include calcium carbonate, zinc carbonate, magnesium oxide, calcium silicate, sodium aluminate, calcium aluminate, sodium aluminosilicate, magnesium silicate, potassium titanate, glass balloons, glass flakes, glass powder, silicon carbide, silicon nitride, boron nitride, gypsum, fired kaolin, zinc oxide, antimony trioxide, zeolite, hydrotalcite, wollastonite, silica, talc, metal powder, alumina, graphite, carbon black, and carbon nanotubes. Specific examples of the inorganic fibers include cut glass fibers, milled glass fibers, glass fibers, gypsum whiskers, metal fibers, metal whiskers, ceramic whiskers, carbon fibers, and cellulose nanofibers.

The filament for three-dimensional printing of the present invention is a filament that is used for printing a three-dimensional printed object (resin formed object) with a three-dimensional printer. The filament for three-dimensional printing may be formed of the resin composition for three-dimensional printing alone; namely it may have a single layer structure formed of a single layer of the resin layer (X). The filament for three-dimensional printing of the present invention may have a multilayer structure including at least two or more resin layers formed of two or more kinds of the resin compositions, respectively.

Fig. 1 is an illustration obtained by observing a cross section of the filament for three-dimensional printing having a multilayer structure cut at an arbitrary position in the direction perpendicular to a long axis. As represented by Fig. 1, the filament for three-dimensional printing that has a multilayer structure preferably has a structure including an inner layer 2 as a layer inside and an outer layer 1 as a layer outside. The structure shown in Fig. 1 is a structure that is referred to as a core-sheath structure, in which the inner layer 2 is the core, and the outer layer 1 is the sheath. A structure including plural cores may also be used.

The filament for three-dimensional printing that has a multilayer structure may have three or more layers. The laminated structure thereof is not particularly limited, and for example, it may have plural layers that are laminated from the interior of the filament for three-dimensional printing toward the outer circumference thereof, as similar to Fig. 1. For example, in the case of three layers, the inner layer 2 may be divided into a layer inside and a layer outside. In the multilayer structure, the boundary between the layers may be unclear. The multilayer structure is preferably a structure including three or less layers, and is particularly preferably a two-layer structure, from the standpoint of the productivity.

In the multilayer structure, it is acceptable that at least one layer is the resin layer (X) of the present invention described above. In the multilayer structure, the layer other than the at least one layer may be formed of a layer (which may be hereinafter referred to as the second layer) other than the resin layer (X). The second layer may contain one kind of a resin component or may be a mixture of two or more kinds of resins, and other components than the resin component may be blended therein. The resin composition of the second layer is referred to as the resin composition for the second layer for convenience, even if it consists of one kind of a resin.

Examples of the resin component constituting the resin composition for the second layer include an acrylonitrile-butadiene-styrene based resin (ABS resin), a polylactic resin (PLA resin), a polyurethane based resin, a polyolefin based resin, a polyester based resin, a polystyrene based resin, an acrylic based resin, a polycarbonate based resin, a polyvinyl chloride based resin, a silicone based resin, a polyamide resin, a polycaprolactone based resin, and various kinds of rubber and elastomers and the like. These resins may be used alone or as a combination of two or more kinds thereof. The polycarbonate resin may be the polycarbonate resin (A) or the aromatic polycarbonate based resin (B3) described above, or may be another polycarbonate resin. The same is applied to the polyester based resin and the polycaprolactone based resin. The other components than the resin component are also as described above.

In the multilayer structure, the outermost layer is preferably formed of the resin layer (X). In the case where the outermost layer is formed of the resin layer (X), the interlayer adhesion between the materials (such as the accumulated strands) becomes good in printing a 3D printed object. Accordingly, in the two-layer structure as shown in Fig. 1, the

outer layer 1 (sheath) is preferably formed of the resin layer (X).

The water content of the filament for three-dimensional printing of the present invention is preferably 2.5% or less, more preferably 2.0% or less, further preferably 1.5% or less, and particularly preferably 1.0% or less. The water content is preferably as small as possible, and may be 0.03% or more, or 0.06% or more. The water content that is in the range is preferred since foaming and smoking in extrusion molding are suppressed, and the dimensional stability, the mechanical strength, and the like are stabilized. The water content is measured by the Karl Fischer's method. The filament for three-dimensional printing after production is preferably dried and stored in a moisture-proof package (such as an aluminum bag, a vapor-deposited film, a glass container). The filament for three-dimensional printing may be appropriately dried to make a water content within the range before use.

(Structure of Filament for Three-dimensional Printing)

The diameter of the filament for three-dimensional printing of the present invention (filament diameter) is generally 1.0 mm or more, preferably 1.5 mm or more, more preferably 1.6 mm or more, and particularly preferably 1.7 mm or more, and is, for example, 5.0 mm or less, preferably 4.0 mm or less, more preferably 3.5 mm or less, and particularly preferably 3.0 mm or less. In the case where the filament diameter is in the range, the filament can be favorably applied, for example, to formation of a resin formed object through the material extrusion method.

(Winding body and Cartridge)

In the production of a resin formed object with a three-dimensional printer using the filament for three-dimensional printing of the present invention, there are demands of the stable storage of the filament for three-dimensional printing and the stable supply of the filament for three-dimensional printing to the three-dimensional printer. Accordingly, the filament for three-dimensional printing may be wound on a bobbin or the like as a winding body and the winding body is sealed and packaged.

More specifically, the filament for three-dimensional printing may be sealed inside a cartridge. The cartridge includes a winding body of the filament for three-dimensional printing wound on a bobbin or the like and a container housing the winding body inside. It is preferable that the filament for three-dimensional printing is housed in a cartridge from the standpoint of the long-term storage, the stable delivery, the protection from the environmental factors, such as the moisture, the prevention of twisting, and the like. Examples of the container constituting the cartridge include a container having a structure that is sealed except for an orifice for the delivery of the filament. Inside the container, a moisture proof material or a moisture absorbent material may be disposed, in addition to the winding body wound on a bobbin.

The winding body of the filament for three-dimensional printing wound on a bobbin or the cartridge including the winding body is disposed inside or around the three-dimensional printer, and the filament is constantly delivered from the cartridge to the three-dimensional printer.

[Production Method of Filament for Three-dimensional Printing]

In the production method of the filament for three-dimensional printing of the present invention, the polycarbonate resin (A), the thermoplastic resin (B), and the other components blended depending on necessity may be mixed to provide a resin composition for three-dimensional printing. The mixing method of the components is not particularly limited, and the components may be mixed by a known method, for examples, with a melt-kneading apparatus, such as an extruder, a Banbury mixer, a kneader, or a roll mill. The melt-kneading apparatus used is preferably an extruder from the standpoint of the ability of continuous production and the ability of addition of various materials as a separate feed.

In the case where an extruder is used, a ratio (L/D) of a screw length (L) and a screw diameter (D) is not particularly limited, and is preferably 20 to 80, preferably 25 to 70, further preferably 30 to 60, and particularly preferably 35 to 50, for sufficiently mixing the polycarbonate resin (A) and the thermoplastic resin (B) to be compatibilized with each other.

The temperature in mixing is not particularly limited, and is, for example, 150 to 350°C, and preferably 170 to 300°C.

The extruder used may be any of a single screw extruder, a twin screw extruder, a multiple screw extruder, and a composite extruder, such as a twin screw-single screw composite extruder having a combination thereof. Among these, a twin screw extruder is preferred from the standpoint of the operability during the operation, the ease in cleaning, the ability of the enhancement of the compatibility of the polycarbonate resin (A) and the thermoplastic resin (B), and the ability of the enhancement of the heat resistance, the mechanical characteristics, and the like.

In the case where the melt-kneading apparatus used is an extruder having plural, i.e., two or more, screws, such as a twin screw extruder, a multiple screw extruder, or a twin screw-single screw composite extruder, the screw

structure thereof may be either a non-engagement type or an engagement type, and an engagement type is preferred from the standpoint of the good miscibility and compatibility.

In the case where an extruder having plural, i.e., two or more, screws is used, the rotation directions of the screws may be either the same direction or different directions, and is preferably the same direction, and it is more preferred to use a co-rotation twin screw extruder from the standpoint of the miscibility and the compatibility of the components. The excellent miscibility and compatibility are preferred since unevenness in extrusion amount in the production of the filament described later can be suppressed, resulting in the enhancement of the accuracy of the filament diameter and the roundness thereof.

In the production of the resin composition for three-dimensional printing, the residence time is preferably 30 to 300 seconds. The residence time is more preferably 45 to 250 seconds, further preferably 60 to 200 seconds, and still further preferably 60 to 180 seconds, from the standpoint of the ability of sufficient kneading of the polycarbonate resin (A) and the thermoplastic resin (B) to be compatibilized with each other, and the ability of the suppression of decomposition of the resin components. The residence time herein means the period of time from the input of the materials to the melt-kneading apparatus, such as the extruder, through melt kneading, to the output of these as the resin composition therefrom.

The shear rate in the melt-kneading apparatus, such as the extruder, is preferably 10 to 1,500 $sec^{-1}$. The shear rate is more preferably 30 to 1,300 $sec^{-1}$, further preferably 50 to 1,100 $sec^{-1}$, still further preferably 70 to 1,000 $sec^{-1}$, particularly preferably 90 to 800 $sec^{-1}$, and most preferably 110 to 600 $sec^{-1}$, from the standpoint of the achievement of the sufficient kneading of the polycarbonate resin (A) and the thermoplastic resin (B) to be compatibilized with each other and the achievement of a stable favorable color tone. The shear rate herein means the velocity gradient per unit time. In general, the shear rate in performing shear deformation between two planes can be obtained by the following expression.

$$(\text{shear rate}) = (\text{difference in velocity between two planes}) / (\text{distance between two planes})$$

The screw rotation number of the melt-kneading apparatus is not particularly limited, and is preferably 10 to 500 rpm, more preferably 30 to 350 rpm, and further preferably 50 to 300 rpm, from the standpoint of the suppression of increase of the resin temperature due to shear heat generation.

In the present invention, the melt kneading is preferably performed with the introduction of an inert gas, such as nitrogen, or under a reduced pressure condition, from the standpoint of the achievement of the resin composition having a stable favorable color tone.

[Molding Method of Filament for Three-dimensional Printing]

The filament for three-dimensional printing can be produced by molding the resin composition for three-dimensional printing obtained by mixing with the melt-kneading apparatus, by a known molding method.

For example, the filament can be molded through extrusion molding. In this case, the resin composition for three-dimensional printing obtained by mixing with an extruder may be extruded directly from the extruder to form the filament. In alternative, it is possible that the resin composition obtained by mixing is once taken out from the melt-kneading apparatus, and then placed in an extruder or the like, and molded through extrusion molding or the like. In the case where the filament for three-dimensional printing of the present invention is obtained through extrusion molding, the condition therefor may be appropriately controlled depending on the flow characteristics, the moldability, and the like of the resin composition used, and the molding temperature in the extrusion molding is generally 150 to 350°C, and preferably 170 to 300°C.

In the case where the filament for three-dimensional printing has a multilayer structure, the production method therefor may be a known method. For example, the resin composition constituting the outer layer and the resin composition constituting the inner layer may be used as raw materials and molded by a known molding method, such as lamination extrusion molding. The molding temperature in the extrusion molding may be appropriately controlled depending on the flow characteristics, the moldability, and the like of the resin compositions used, and is generally 150 to 350°C, and preferably 170 to 300°C.

[Production Method of Resin Formed Object]

A resin 3D formed object can be produced by using the filament for three-dimensional printing of the present invention through three-dimensional printing with a three-dimensional printer. Examples of the forming method with a

three-dimensional printer include a material extrusion method (ME method). In the material extrusion method, a filament for three-dimensional printing is used as a material for three-dimensional printing.

The production method of a resin formed object will be described in detail below with reference to the case as an example where a resin formed object is produced by the material extrusion method with using the filament for three-dimensional printing of the present invention.

The three-dimensional printer generally has a chamber, and has inside the chamber a substrate capable of being heated, an extrusion head mounted on a gantry mechanism, a heat-melting device, a guide for a filament, and a raw material supplying part composed of a part for installing the filament cartridge, and the like. The three-dimensional printer may have the extrusion head and the heat-melting device that are integrated to each other in some cases.

The extrusion head is mounted on the gantry mechanism, and thereby is freely movable on an X-Y plane of the substrate. The substrate is a platform for constructing a target three-dimensional object, a supporting material, and the like, and preferably has such functions that the adhesion to a laminate can be provided, and the dimensional stability of the resulting resin formed object as a desired three-dimensional object can be improved, by heating and heat retaining. Furthermore, for the enhancement of the adhesion to the laminate, a glue having stickiness may be coated on the substrate, and a sheet or the like having good adhesion to the laminate may be affixed thereon. Examples of the sheet having good adhesion to the laminate include a sheet having fine unevenness on a surface thereof, such as an inorganic fiber sheet, and a sheet formed of a resin of the same kind as the laminate. At least one of the extrusion head and the substrate is generally movable in Z axis direction perpendicular to the X-Y plane.

The filament for three-dimensional printing is delivered from the raw material supplying part, fed to the extrusion head through one pair of rollers or gears facing each other, melted by heating in the extrusion head, and extruded from a tip nozzle thereof. The extrusion head is moved in position thereof according to a signal generated based on a CAD model, and feeds the raw material onto the substrate for laminating and accumulating. After completing this process, the laminated and accumulated product is taken out from the substrate, and depending on necessity, the supporting material is removed, and the surplus portion is cut, so as to provide a resin formed object as a desired three-dimensional object.

When the filament is supplied to the three-dimensional printer, it is general that the filament is engaged with a driving roll, such as a nip roll or a gear roll, and supplied to the extrusion head while drawing therewith. For strengthening the grasp of the filament with the driving roll through engagement so as to stabilize the supply of the raw material, it is preferred that a fine unevenness shape has been transferred to the surface of the filament, or an inorganic additive, a spreading agent, a pressure-sensitive adhesive, rubber, or the like is blended therewith for enhancing the frictional resistance to the engagement part.

The filament for three-dimensional printing of the present invention has a temperature that provides fluidity suitable for extrusion in a range approximately of 190 to 300°C, which is a temperature capable of being set by an ordinary three-dimensional printer. The temperature of the heat extrusion head is, for example, 290°C or less, and preferably 200 to 280°C. The substrate temperature may be, for example, 120°C or less, and preferably 50 to 120°C. With the substrate temperature of the above temperature or lower, a resin formed object can be stably produced.

The temperature of the molten resin discharged from the extrusion head (discharge temperature) is preferably 180°C or more, and more preferably 190°C or more, and is preferably 300°C or less, more preferably 290°C or less, and further preferably 280°C or less. The temperature of the molten resin that is the lower limit or more is preferred for extruding the filament for three-dimensional printing of the present invention containing the polycarbonate resin (A) having high heat resistance, and is also preferred since the resin can be discharged at a high rate to provide a tendency of enhancing the modeling efficiency. The temperature of the molten resin that is the higher limit or less is preferred from the standpoint that the occurrence of troubles of the resin, such as thermal decomposition, burn, smoking, odor, and stickiness, can be readily prevented, and the deterioration in appearance due to attachment of the thinly stretched molten resin, which is referred to as cobwebbing, or globs of the excessive resin, which is referred to as clamps, to the resin formed object can be prevented.

The molten resin discharged from the extrusion head is discharged into a strand form having a diameter of preferably 0.01 to 1.0 mm, and more preferably 0.02 to 0.5 mm. Such a shape of the molten resin discharged is preferred since the reproducibility of the CAD model tends to improve.

In the production of a resin formed object with a three-dimensional printer using a filament for three-dimensional printing, in the case where the adhesion between the resin strand having been discharged and the resin strand discharged thereon is insufficient when producing the formed object by laminating the resin in the form of the strand extruded from the extrusion head, unevenness (such as grooves) may occur on the surface of the formed object. The unevenness on the surface of the formed object not only may deteriorate the appearance, but also may cause a problem that the formed object becomes breakable. The filament for three-dimensional printing of the present invention is satisfactory in interlayer adhesion between the resin strand having been discharged and the resin strand discharged thereon, and thus a formed object excellent in appearance, surface property, and the like can be stably produced.

In forming a formed object by laminating a material for three-dimensional printing in the form of a strand

discharged from an extrusion head with a three-dimensional printer, the material for three-dimensional printing may be attached to a nozzle portion of the extrusion head in some cases, and furthermore the attached material for three-dimensional printing may be discolored by heat to cause black foreign matters (such as black spots and black strips) in some cases. The foreign matters contaminating the formed object not only may deteriorate the appearance, but also may cause a problem that the formed object becomes breakable. The filament for three-dimensional printing of the present invention is excellent in heat resistance and hardly cause discoloration by heat even though attached to the nozzle portion, and thus a formed object excellent in appearance can be stably produced.

The resin formed object of the present invention may be accelerated or completed for crystallization through a heat treatment after printing, depending on the application and the like thereof.

(Application of Resin Formed Object)

While the application of the resin formed object in the present invention is not particularly limited, the resin formed object can be favorably applied to stationery; toys; covers for mobile phones, smartphones, and the like; components, such as a handgrip; various components of educational materials, home electric appliances, spare parts for OA equipment, automobiles, motorbikes, bicycles, and the like; materials for electric and electronic equipment, agricultural materials, gardening materials, fishery materials, civil engineering and construction materials, medical supplies, and the like.

Examples

The present invention will be described in more detail with reference to examples below, but the present invention is not limited to the examples. Anyway, the measurement methods for the properties and the evaluation methods were as follows.

(1) Number of tanδ Peak and Temperature of Peak

The obtained resin composition for three-dimensional printing was measured for the number of the loss tangent (tanδ) peak and the peak temperature by performing the temperature dispersion measurement of dynamic viscoelasticity (dynamic viscoelasticity measurement according to JIS K7244-4) at a strain of 0.1%, a frequency of 10 Hz, a temperature rise rate of 3°C/min in a temperature range of 0 to 200°C with a viscoelasticity spectrometer "DVA-200" (produced by IT Keisoku Seigyo Co., Ltd.).

(2) Glass Transition Temperature (Tga) and (Tgb)

Each resin component was subjected to the temperature dispersion measurement of dynamic viscoelasticity in the same manner as the item (1) above while changing a temperature range into -100 to 200°C, and the temperature of the loss tangent (tanδ) peak was designated as the glass transition temperature of the resin component. In the following examples, the glass transition temperature (Tga) of each polycarbonate resin (A) and the glass transition temperature (Tgb) of each thermoplastic resin (B) were measured.

(3) Evaluation of Resin Formed Object

<Interlayer Adhesion>

The interlayer adhesion was evaluated by measuring the tensile strength according to JIS K7161. As the evaluation specimen, a dumbbell specimen having a length of 75 mm, a width of 10 mm, and a thickness of 5 mm was prepared. The evaluation specimen was produced according to the condition described in the examples shown later with the Z-axis direction (lamination direction) directed to the length direction of the specimen. A specimen having a tensile strength of 15 MPa or more was evaluated as "A", and a specimen having less than 15 MPa was evaluated as "B".

<Warpage Evaluation>

A specimen for evaluating warpage having a sheet form with a length of 100 mm, a width of 25 mm, and a thickness of 5 mm was produced with a three-dimensional printer having a modeling table temperature set at 120°C. The specimen was produced with the Z-axis direction (lamination direction) directed to the thickness direction of the specimen. The amount of warpage occurring in producing the specimen was visually observed.

A specimen that had no warpage or had warpage occurring only in slight amount, thereby enabling to complete

the production of the specimen was evaluated as "A", and a specimen that was unable to complete the production due to warpage occurring was evaluated as "B".

<Impact Resistance>

The impact resistance was evaluated by measuring the Charpy impact resistance according to JIS K7111. As the evaluation specimen, a rectangular specimen having a length of 80 mm, a width of 10 mm, and a thickness of 5 mm was used. The evaluation specimen was produced according to the condition described in the examples shown later with the Z-axis direction (lamination direction) directed to the length direction. A specimen having a Charpy impact resistance of 15 $kJ/m^2$ or more was evaluated as "AA", a specimen having 10 $kJ/m^2$ or more and less than 15 $kJ/m^2$ was evaluated as "A", and a specimen having less than 10 $kJ/m^2$ was evaluated as "B".

<Temporal Change>

A specimen in a sheet form having a length of 50 mm, a width of 50 mm, and a thickness of 5 mm was allowed to stand in an oven at 100°C for 200 hours, and then visually observed. A specimen having no change in appearance was evaluated as "A", and a specimen partially whitened inside was evaluated as "B". The whitening was judged as bleed of the flame retarder.

<Total Evaluation>

A specimen having at least one result of "AA" with the others being "A" at worst in the evaluation tests was evaluated as "AA", a specimen having all the results of "A" was evaluated as "A", and a specimen having at least one result of "B" was evaluated as "B".

The materials used in Examples and Comparative Examples were as follows.

<Polycarbonate Resin (A)>

(a-1): Bisphenol A type polycarbonate resin (trade name: Iupilon S3000, produced by Mitsubishi Engineering-Plastics Corporation, glass transition temperature: 155°C, viscosity average molecular weight: 54,800)
(a-2): Bisphenol A type polycarbonate resin (trade name: Iupilon H4000, produced by Mitsubishi Engineering-Plastics Corporation, glass transition temperature: 152°C, viscosity average molecular weight: 35,400)
(a-3): Bisphenol A type polycarbonate resin (trade name: WONDERLITE PC122, produced by Asahi Kasei Advance Corporation, glass transition temperature: 153°C, viscosity average molecular weight: 37,000)

<Thermoplastic Resin (B)>

(b-1): Polycaprolactone based resin (trade name: Capa 6800, produced by Perstorp AB (currently known as Ingevity Corporation), glass transition temperature: -60°C, number average molecular weight: 256,000)
(b-2): Polyester based resin (trade name: SKYGREEN J2003, produced by SK Chemicals Co., Ltd., polyhydric alcohol component: ethylene glycol/diethylene glycol/1,4-cyclohexanedimethanol = 42.9/1.9/55.2% by mol, polybasic carboxylic acid component: terephthalic acid = 100% by mol, glass transition temperature: 82°C, number average molecular weight: 49,100)
(b-3): Polyester based resin (trade name: SKYGREEN S2008, produced by SK Chemicals Co., Ltd., polyhydric alcohol component: ethylene glycol = 70% by mol, 1,4-cyclohexanedimethanol = 30% by mol, polybasic carboxylic acid component: terephthalic acid = 100% by mol, glass transition temperature: 84°C)

<Additional Component>

(c-1): Phosphorous based flame retarder (trade name: PX200, produced by Daihachi Chemical Industry Co., Ltd., condensed aromatic phosphate ester, number average molecular weight: less than 5,000)

(Example 1)

<Production of Resin Composition for Three-dimensional Printing>

The resin components used each were prepared as a pellet material, and dried in advance at 90°C for 24 hours to reduce the water content of the pellets to 0.1% or less. According to the formulation shown in Table 1, 95 parts by mass of the polycarbonate resin (a-1) and 5 parts by mass of the polycaprolactone based resin (b-1) were placed in a co-rotation twin screw kneader (diameter: 26 mm) (produced by Labtech Engineering Co., Ltd., trade name: LTS26-40, L/D = 40) and kneaded to provide a resin composition for three-dimensional printing. The kneading condition was a cylinder set temperature of 240°C, a rotation number of 150 rpm, and a discharge rate of 15 kg/hr. The obtained resin composition for three-dimensional printing was measured for dynamic viscoelasticity.

<Production of Filament for Three-dimensional Printing>

The resin composition for three-dimensional printing obtained above was placed in a co-rotation twin screw extruder (diameter: 15 mm), and a filament for three-dimensional printing having a single layer structure was produced. The resin composition for three-dimensional printing was extruded from the die having a diameter of 3 mm at a set temperature of 240°C and a discharge rate of 1.0 kg/hr, and the filament was wound on a winder at 5 m/min through a water bath at 40°C. The filament diameter was in a range of 1.65 to 1.9 mm.

<Production of Resin Formed Object>

The filament produced was dried in advance at 90°C for 24 hours to reduce the water content to 0.1% or less. The evaluation specimens each were produced by the material extrusion method with a 3D printer (produced by Mutoh Industries, Ltd., trade name: MUTOH-MF2200D). The production condition was a printing speed of 30 mm/sec, an internal filling density of 100%, a discharge temperature of 240°C, and a substrate temperature of 80°C. The molten resin was discharged from the extrusion head in the form of strand having a diameter of 0.5 mm. The evaluation specimens were evaluated for the tensile strength, the warpage, and the impact resistance. The results are shown in Table 1.

(Examples 2 to 5 and Comparative Examples 1 to 3)

The same procedures were performed as in Example 1 except that a resin composition for three-dimensional printing was produced by changing the formulation shown in Table 1.

Table 1

| | | | | Example 1 | Example 2 | Example 3 | Example 4 | Example 5 | Comparative Example 1 | Comparative Example 2 | Comparative Example 3 |
|---|---|---|---|---|---|---|---|---|---|---|---|
| Formulation (mass ratio) | Polycarbonate based resin (A) | (a)-1 | S3000 | 95 | | | 93 | 60 | | 60 | |
| | | (a)-2 | H4000 | | 95 | | | | | | 90 |
| | | (a)-3 | P122 | | | 95 | | | 100 | | |
| | Thermoplastic resin (B) | (b)-1 | Capa6800 | 5 | 5 | 5 | 7 | | | | |
| | | (b)-2 | J2003 | | | | | 40 | | | |
| | | (b)-3 | S2008 | | | | | | | 40 | |
| | Additional component | (c)-1 | PX200 | | | | | | | | 10 |
| Evaluation result | Number of tanδ peak | | | 1 | 1 | 1 | 1 | 1 | 1 | 2 | 1 |
| | Temperature of tanδ peak (°C) | | | 140 | 140 | 140 | 130 | 126 | 153 | - | 130 |
| | Tensile strength in Z-axis direction | | | A | A | A | A | A | A | B | A |
| | Warpage evaluation | | | A | A | A | A | A | B | A | A |
| | Impact resistance | | | AA | AA | AA | AA | A | AA | B | B |
| | Temporal change | | | A | A | A | A | A | A | A | B |
| | Total evaluation | | | AA | AA | AA | AA | A | B | B | B |

As apparent from the aforementioned results, the 3D printed object was suppressed in warpage while improving the interlayer adhesion and the impact resistance, by making the number of the tanδ peak to 1, and setting the temperature of the peak to 100°C or more and less than 150°C, with the thermoplastic resin (B) contained as the resin component in addition to the polycarbonate resin (A).

On the other hand, in the case where the thermoplastic resin (B) was not used, or the number of the peak was 2 or more even though the thermoplastic resin (B) was used, the interlayer adhesion and/or the impact resistance were not improved, or warpage occurred in the 3D printed object.

Reference Sign List

1: Outer layer
2: Inner layer

**Claims**

**1.** A filament for three-dimensional printing comprising: a resin layer (X) containing a polycarbonate resin (A) and a thermoplastic resin (B) other than the polycarbonate resin (A) and satisfying the following condition (1):
condition (1): having one loss tangent (tanδ) peak measured by temperature dispersion measurement for dynamic viscoelasticity in JIS K7244-4 at a strain of 0.1%, a frequency of 10 Hz, and a temperature rise rate of 3°C/min in a range of 0 to 200°C, the peak existing in a range of 100°C or more and less than 150°C.

**2.** The filament for three-dimensional printing according to claim 1, wherein the thermoplastic resin (B) has a glass transition temperature (Tgb) of 100°C or less.

**3.** The filament for three-dimensional printing according to claim 1 or 2, wherein the thermoplastic resin (B) is at least one kind selected from the group consisting of a polycaprolactone based resin (B1), a polyester based resin (B2), and an aromatic polycarbonate based resin (B3).

**4.** The filament for three-dimensional printing according to any one of claims 1 to 3, wherein the resin layer (X) contains the polycarbonate resin (A) in an amount of 50 parts by mass or more and 98 parts by mass or less per 100 parts by mass of resin component contained in the resin layer (X).

**5.** The filament for three-dimensional printing according to any one of claims 1 to 4, wherein the polycarbonate resin (A) has a viscosity average molecular weight of 20,000 or more and 70,000 or less.

**6.** The filament for three-dimensional printing according to any one of claims 1 to 5, wherein the polycarbonate resin (A) is a bisphenol A type polycarbonate resin.

**7.** The filament for three-dimensional printing according to any one of claims 1 to 6, wherein the filament for three-dimensional printing has a multilayer structure.

**8.** The filament for three-dimensional printing according to any one of claims 1 to 7, wherein the filament for three-dimensional printing has a filament diameter of 1.0 mm or more and 5.0 mm or less.

**9.** A winding body comprising the filament for three-dimensional printing according to any one of claims 1 to 8.

**10.** A cartridge for a three-dimensional printer, comprising the winding body according to claim 9, and a container housing the winding body inside.

Fig. 1

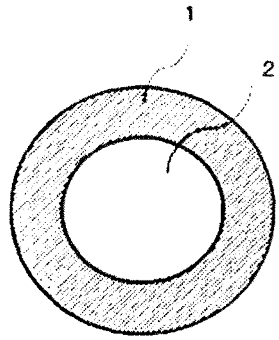

## INTERNATIONAL SEARCH REPORT

International application No.
PCT/JP2020/014063

A. CLASSIFICATION OF SUBJECT MATTER
B29C 64/118(2017.01)i; B29C 64/314(2017.01)i; B33Y 70/00(2020.01)i
FI: B29C64/118; B29C64/314; B33Y70/00

According to International Patent Classification (IPC) or to both national classification and IPC

B. FIELDS SEARCHED

Minimum documentation searched (classification system followed by classification symbols)
B29C64/118; B29C64/314; B33Y70/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-502852 A (STRATASYS, INC.) 26.01.2017 (2017-01-26) entire text | 1-10 |
| A | US 2017/0284876 A1 (XEROX CORPORATION) 05.10.2017 (2017-10-05) entire text | 1-10 |
| A | WO 2016/171191 A1 (MCPP INNOVATION LLC) 27.10.2016 (2016-10-27) entire text | 1-10 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June 2020 (03.06.2020) | 16 June 2020 (16.06.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/014063

| Patent Documents referred in the Report | Publication Date | Patent Family | Publication Date |
|---|---|---|---|
| JP 2017-502852 A | 26 Jan. 2017 | US 2015/0145168 A1<br>entire text<br>US 2014/0141166 A1<br>US 2015/0251353 A1<br>US 2015/0252190 A1<br>US 2015/0259530 A1<br>WO 2015/081009 A1<br>WO 2014/081594 A1<br>CN 105764675 A<br>KR 10-2016-0091385 A<br>HK 1221689 A | |
| US 2017/0284876 A1 | 05 Oct. 2017 | EP 3228586 A1<br>entire text<br>CN 107274969 A | |
| WO 2016/171191 A1 | 27 Oct. 2016 | US 2018/0038015 A1<br>entire text<br>EP 3287264 A1<br>CN 107530955 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005523391 A
- JP 2013540629 A
- JP 9087504 A
- JP 2003026911 A